# EUROPÄISCHE PATENTSCHRIFT

(11) **EP 0 562 330 B1**
(45) Veröffentlichungstag und Bekanntmachung des Hinweises auf die Patenterteilung: **20.08.1997**
(21) Anmeldenummer: 93103534.9
(22) Anmeldetag: 05.03.1993
(51) Int. Cl.: C08J 7/04, C08L 25/06, C09D 133/06

(54) **Gegenstände aus schwer brennbaren Polymerisaten mit verträglichen (Meth)acrylat-Beschichtungen**
Articles made from fire-resistant polymers with compatible (meth-)acrylate-coatings
Articles à polymères résistants aux flammes ayant des revêtements (meth)acryliques compatibles

(30) Priorität: 16.03.1992 DE 4208327
(43) Veröffentlichungstag der Anmeldung: 29.09.1993
(73) Patentinhaber: Röhm GmbH, 64293 Darmstadt (DE)
(72) Erfinder: Numrich, Uwe, W-6108 Weiterstadt (DE); Siol, Werner, Dr., W-6100 Darmstadt-Eberstadt (DE); Terbrack, Ulrich, W-6107 Reinheim 2 (DE)

(56) Entgegenhaltungen:
- EP-A- 455 272
- DE-U- 8 514 365
- US-A- 3 368 916

## Beschreibung

### Gegenstand der Erfindung

Die Erfindung umfaßt Gegenstände, bestehend aus einem Gemisch aus Styrol als monomeren Bestandteil enthaltendem Polymerisat und einem Flammschutzmittel, versehen mit einem Überzug aus einem Poly(meth)acrylat, das mit dem Gemisch aus styrolhaltigem Polymerisat und Flammschutzmittel verträglich ist.

### Stand der Technik

In der Regel gelten unterschiedliche Polymerspecies als nicht miteinander verträglich, d.h. unterschiedliche Polymerspecies bilden bis hinab zu geringen Anteilen einer Komponente im allgemeinen keine homogene Phase aus, die durch völlige Mischbarkeit der Komponenten charakterisiert wäre.

Unter gewissen Voraussetzungen sind Copolymerisate aus Styrol und Maleinsäureanhydrid, sowie aus Styrol und Acrylnitril mit Polymethylmethacrylat (PMMA) verträglich (DE-A 20 24 940), wobei die verbesserten Gebrauchseigenschaften dieser Formmassen hervorgehoben werden. Copolymerisate aus Styrol und Monomeren, die zur Wasserstoffbrückenbindungen befähigte Hydroxylgruppen aufweisen, sind bei bestimmter Zusammensetzung ebenfalls mit Polymethacrylaten verträglich, wie zum Beispiel Copolymerisate aus Styrol und p-(2-Hydroxylhexafluoroisopropyl)styrol (B.I. Min and E.M. Pierce, Organic Coatings and Plastics Chemistry 45, Seiten 58 bis 64, 1981) oder Copolymerisate aus Styrol und Allylalkohol (F. Cangelosi and M.T. Shaw, Polymer Preprints (Am. Chem. Soc. Div. Polym. Chem. 24, Seiten 258, 259, 1983).

Neuere Ergebnisse über styrolhaltige "Polymer Blends" und deren mögliche Anwendungen werden von L.M. Robeson in Polym. Eng. Sci. 24 (8), Seiten 587 bis 597 (1984) berichtet.

Polystyrol sowie andere Styrol enthaltende Polymerisate gelten als mit PMMA unverträglich. Ebenso sind andere Polymethacrylate und Polyacrylate mit Polystyrol unverträglich. Dies gilt beispielsweise für Polybutylmethacrylat, Polyisobutylmethacrylat, Polyneopentylmethacrylat, Polyhexylmethacrylat und viele andere (vgl. hierzu auch R.H. Somani and M.T. Shaw, Macromolecules 14, Seiten 1549 bis 1554, 1981).

Mechanische Abmischungen von Polymerisaten (Polyblends) haben in bestimmten Fällen und auf bestimmten Gebieten der Kunststoffindustrie zu eigenschaftsmäßig verbesserten Kunststoffprodukten geführt (vgl. Kirk-Othmer, 3rd. Ed. Vol. 18, Seiten 443 bis 478, J. Wiley, 1982). Die physikalischen Eigenschaften solcher "Polyblends" stellen gewöhnlicherweise einen Kompromiß dar, der summarisch eine Verbesserung gegenüber den Eigenschaften der individuellen Polymerisate bedeuten kann. Dabei haben multiphasische Polymermischungen eine ungleich größere kommerzielle Bedeutung erlangt als die verträglichen Mischungen (vgl. Kirk-Othmer, loc.cit, Seite 449).

EP-A 268 040 (= US 4 898 912 und US 5 047 481) beschreibt verträgliche Polymermischungen aus einer Cyclohexyl(meth)acrylat als Monomeres enthaltenden Polymerisatkomponente und einer Styrol als Monomeres enthaltenden Polymerisatkomponente. Die angeführten Polymermischungen sind transparent, weisen eine einheitliche Glasübergangstemperatur und eine untere kritische Lösungstemperatur auf (Lower Critical Solution Temperature = LCST; vgl. hierzu DE-A 34 36 476 und DE-A 34 36 477). Anwendung finden diese Polymermischungen vorzugsweise als extrudierte oder spritzgegossene Formkörper,

Datenspeicherplatten, optische Gradientenfasern, thermotrope Schutzverglasungen oder Dispersionsfilme.

In US 4 906 699 wird ein Schlagzäh-Modifizierungsmittel für Kunststoffe beschrieben, bestehend aus einem phasenseparierten Elastomeranteil, der eine Glasübergangstemperatur < 10 Grad C aufweist, und einem darauf gepfropften Anteil aus Copolymerisat, bestehend aus Methylmethacrylat und (Meth)acrylsäureestern, die, ggfls. substituierte, Cycloalkyleinheiten als Estersubstituenten enthalten.

In EP-A 451 809 werden verträgliche Polymermischungen aus einer Cyclopentyl(meth)acrylat als Monomeres enthaltenden Polymerkomponente und einer Styrol als Monomeres enthaltenden Polymerkomponente und deren technische Anwendung beschrieben.

EP-A 455 272 betrifft Gegenstände, die gebildet werden aus einem Styrol als Monomer enthaltendem Polymer, das mit einem Überzug aus einem Cyclohexyl(meth)acrylat als Monomer enthaltendem Polymer versehen ist. Das den Überzug bildende Polymerisat enthält gegebenenfalls UV-Absorber, der auch einpolymerisiert sein kann.

Die Gegenstände können beispielsweise spritzgegossene oder extrudierte Formkörper, Datenspeicherplatten oder optische Gradientenfasern sein.

In US-P 3,368,916 wird ein flammfest ausgerüstetes Polystyrol-Material beschrieben, das durch Einbau von organischen Zinn-Verbindungen sich erst oberhalb von 450°F (= 232°C) zersetzt. Es ist mit einer UV-Schutzschicht auf Basis (Meth)acrylat ausgerüstet, die aber mit dem Polystyrol-Material umverträglich ist.

### Aufgabe und Lösung

Für eine Reihe von Anwendungen wie beispielsweise im Hausbau, Flugzeugbau, Automobilsektor oder im Maschinengehäusebau sind flammfeste Polymerisate vorgeschrieben. Hierbei sind insbesondere flammfeste Polymerisate erwünscht, die gleichzeitig hohe Transparenz und Witterungsstabilität aufweisen. So weisen beispielsweise Polymere, die einen hohen Anteil an aromatischen Strukturen neben einem niedrigen Anteil an leicht oxidierbaren Steitengruppen aufweisen, eine relativ hohe Flammfestigkeit auf (vgl. hierzu Kirk-Othmer, Encyclopedia of Chemical Technology, 3rd. Ed., Vol. 10, Seiten 348 - 355, J. Wiley, 1980). Aromatische Polyimide haben eine hervorragende Flammfestigkeit, zeigen aber demgegenüber schlechte Witterungsbeständigkeit und schlechte thermoplastische Verarbeitbarkeit.

Styrol-haltige Polymerisate, wie beispielsweise Polystyrol, schlagzähmodifizierte Polystyrole oder Acrylnitril-Butadien-Styrol-Terpolymerisate (ABS), die oft für oben genannte Anwendungen eingesetzt werden, weisen zwar auch einen hohen Anteil an aromatischen Strukturen auf, müssen aber aufgrund ihres ebenfalls hohen Anteils an leicht oxidierbaren Gruppen mit Flammschutzmitteln stabilisiert werden (Kirk-Othmer, loc.cit, Seite 350). Üblicherweise werden hierfür bis zu 30 Gew.-% an Flammschutzmittel dem Styrol-haltigen Polymerisat zugemischt (Kirk-Othmer, loc.cit. Seite 382). Eine Zugabe von Flammschutzmittel in dieser Größenordnung verändert die Polymerisat-Eigenschaften substantiell, wobei das Flammschutzmittel in vielen Fällen maßgeschneidert werden muß. Oben genannte Styrol-haltige Polymerisate sind gegenüber witterungsbedingter Lichteinwirkung, wie insbesondere UV-Strahlung, labil, was sich in einer unerwünscht starken Vergilbung äußert.

Die resultierende Aufgabe, Styrol-haltige Polymerisate mit guter Flammfestigkeit und guter Witterungsstabilität bzw. daraus bestehende Formkörper herzustellen, wird überraschenderweise durch die vorliegende Erfindung gelöst.

Die Erfindung betrifft flammfeste und witterungsbeständige Gegenstände, die B1-Brandfestigkeit nach DIN 4102 besitzen, gebildet aus einem Gemisch von 70 bis 99,9 Gew.-Teilen eines Polymerisats A, enthaltend 20 bis 100 Gew.-% Styrol-Einheiten mit 0,1 bis 30 Gew.-Teilen eines mit A verträglichen Flammschutzmittels B als Kernmaterial, welches mit einem Überzug mit einer Dicke von 1 - 200 µm eines, mit dem Gemisch aus A und B verträglichen Poly(meth)acrylats C, enthaltend 10 bis 100 Gew.-% von Monomeren der Formel I 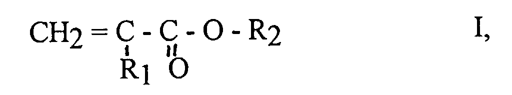 worin:
- R₁: für Wasserstoff, Methyl und
- R₂: für einen gegebenenfalls substituierten Cycloalkylrest mit 5 bis 8 Kohlenstoffatomen oder einen nichtaromatischen, ringkohlenstoffhaltigen Heteroyclus mit 4 bis 12 Ringatomen und wenigstens 2 Heteroatomen X = 0, S, NH, wobei die Heteroatome nicht nebeneinander stehen dürfen, steht, versehen ist, wobei das Poly(meth)acrylat C kein Flammschutzmittel, aber einen gegebenenfalls einpolymerisierten UV-Absorber in Anteilen von 0,1 bis 20 Gew.-% bezogen auf C enthält, und wobei das Polymerisat A einen Anteil von Monomeren aus der Gruppe (Meth)acrylnitril, Maleinsäureanhydrid und Maleinsäureimiden unter 10 Gew.-% aufweist.
Polymerisat A, Flammschutzmittel B und Poly(meth)acrylat C sind, wie aus dem weiteren hervorgeht, gemäß ihren bestimmenden Komponenten eindeutig voneinander verschieden, so daß nach den Erfahrungen des Standes der Technik völlige Verträglichkeit bei dem vorliegenden ternären System, gebildet aus A, B und C, nicht zu erwarten war. Nach den vorliegenden Befunden ist die Verträglichkeit der aus A, B und C gebildeten Mischungen sogar so gut, daß in einigen Fällen bei 200 Grad C und darüber keine Entmischung auftritt.

### Durchführung der Erfindung

### Das Polymerisat A

Der Styrolgehalt am Polymerisat A beträgt wenigstens 20 Gew.-%, bevorzugt wenigstens 50 Gew.-%, besonders bevorzugt wenigstens 90 Gew.-% und ganz besonders bevorzugt wenigstens 99 Gew.-%. Das Styrol im Polymerisat A kann zu einigen Gew.-%, z.B. 10 Gew.-%, durch p-Methylstyrol substituiert werden. Weiterhin ist in gewissem Umfang ein Austausch des Styrols durch andere alkylsubstituierte, insbesondere C₁- bzw. C₄-substituierte Styrole, wie beispielsweise m-Methylstyrol oder p-tert.-Butyl-Styrol, möglich. Ebenso kann Styrol durch Ester der Acrylsäure und der Methacrylsäure teilweise ersetzt werden, vor allem durch Ester von C₁- bis C₁₈-Alkoholen, vorzugsweise von C₁- bis C₈-Alkoholen. Ferner kann das Styrol in untergeordneter Menge durch andere Vinylverbindungen, insbesondere Vinylester, ersetzt werden, wie z.B. Vinylacetat und Vinylpropionat. Während die Polymerisationskomponente A mit anderen hydrophoben Vinylverbindungen also weitestgehend modifiziert werden kann, ist der Anteil an sehr polaren Monomeren, wie beispielsweise (Meth)acrylnitril, Maleinsäureanhydrid, Maleinsäureimiden, p-(2-Hydroxylhexafluoroisopropyl)styrol oder Allylalkohol sehr begrenzt. Der Anteil dieser polaren Monomeren sollte von 0 bis unter 10 Gew.-%, vorzugsweise unter 5 Gew.-% am Polystyrol A betragen. Besonders bevorzugt sind solche Polymerisate A, die weniger als 0,1 Gew.-% dieser polaren Monomeren enthalten, vorzugsweise 0 Gew.-%. Weiterhin können als Polymerisat A beispielsweise schlagzähe Polystyrole, z.B. Styrol-Butadien-Copolymerisate, Elastomer-modifizierte Copolymere aus Styrol und Methylmethacrylat oder andere High-Impact-Polystyrol (HIPS)-Typen verwendet werden (vgl. hierzu Kirk-Othmer, Encyclopedia of Chemical Technology, 3rd. Ed., Vol. 21, Seiten 801 bis 847, J. Wiley 1983). Vorzugsweise sind oben genannte Polymerisate A transparent, wie beispielsweise Polystyrol oder Styrol-Butadien-Styrol (SBS)-Triblock-Copolymere.

### Das Flammschutzmittel B

Flammschutzmittel B lassen sich in drei Hauptklassen unterteilen: anorganische Verbindungen, organische halogenhaltige Verbindungen und phosphorhaltige Verbindungen (vgl. hierzu Kirk-Othmer, loc.cit., Seiten 348 bis 419). Für die Styrol-haltigen Polymerisate A kommen als Flammschutzmittel B vorzugsweise Kombinationen aus Antimontrioxid und halogenhaltigem Additiv, Aluminiumtrihydrat, Hexabromcyclododecan, Tris-(2-Chlorethyl)phosphat, Tris-(1,3-Dichlor-2-propyl)phosphat oder Tris-(2,3-Dibrom-1-propyl)phosphat. Besonders bevorzugt werden Flammschutzmittel B, die bei transparenten Styrol-haltigen Polymerisaten A nach dem Einmischen die Lichtdurchlässigkeit nicht deutlich reduzieren, wie beispielsweise die Kombination von Polystyrol (A) und Hexabromcyclododecan (B).

Die Einarbeitung der Flammschutzmittel B in das Polymerisat A erfolgt beispielsweise durch Schmelzemischen im Kneter oder im Extruder, durch Beschichten oder durch Copolymerisation (vgl. Kirk-Othmer, loc.cit., Seite 349).

### Das Polymerisat C

Als Monomere der Formel I werden vorzugsweise Cyclohexylmethacrylat, Cyclohexylacrylat, Cyclopentylmethacrylat und/oder 2,2-Dimethyl-1,3-dioxolan-4-ylmethylmethacrylat verwendet, wobei besonders bevorzugt Cyclohexylmethacrylat und Cyclohexylacrylat Verwendung finden. Für die Copolymerisation geeignete Comonomere im Polymerisat C, die in Anteilen von 0 bis 90 Gew.-%, bevorzugt von 10 bis 80 Gew.-%, besonders bevorzugt 30 bis 70 Gew.-%, anwesend sein können, sind Acryl- bzw. Methacrylsäureester, im allgemeinen solche von nicht alicyclischen Alkoholen mit 1 bis 12 Kohlenstoffatomen, insbesondere Alkanolen. Besonders genannt sei das Methylmethacrylat als Comonomeres. Der Anteil der Monomere der Formel I am Gehalt des Polymerisats C liegt in der Regel im Bereich 100 bis 10 Gew.-%, bevorzugt im Bereich 90 bis 20 Gew.-%, besonders bevorzugt im Bereich 70 bis 30 Gew.-%.

Vorzugsweise sind die Polymerisate C Copolymerisate aus 50 bis 75 Gew.-% Methylmethacrylat, 20 bis 50 Gew.-% Cyclohexylmethacrylat, 0,5 bis 5 Gew.-% Acrylsäureestern von cyclischen und/oder nicht alicyclischen Alkoholen mit 1 bis 12 Kohlenstoffatomen und gegebenenfalls weiteren 0 bis 20 Gew.-% Methacrylsäureestern von nicht alicyclischen Alkoholen mit 3 bis 18 Kohlenstoffatomen.

Die Polymerisate C können gegebenenfalls mit Elastomerphasen schlagzähmodifiziert sein. Zur Herstellung von schlagzähmodifizierten (Meth)acrylat-Polymerisationen siehe beispielsweise DE-A 38 42 796.

Vorzugsweise soll das Polymerisat C 0,1 bis 20 Gew.-% (bezogen auf Polymerisat C) mindestens eines UV-Absorbers, der bevorzugt copolymerisiert ist, in zweckmäßiger Verteilung enthalten. Brauchbare UV-Absorber werden beispielsweise in Kirk-Othmer, Encyclopedia of Chemical Technology, 3rd. Ed., Vol. 23, Seiten 615 bis 627, J. Wiley 1983; R. Gächter und H. Müller, Taschenbuch der Kunststoff-Additive, Seiten 90 bis 143, Carl Hanser, 1979; Ullmann's Encyclopädie der technischen Chemie, Bd. 15, Seiten 256 bis 260, 4. Aufl., Verlag Chemie, angegeben.

### Herstellung der Polymersate A und C

Die Herstellung der Polymerisate A und C kann nach den bekannten Regeln der Polymerisation und nach bekannten Verfahren erfolgen.

Die Polymerisate vom Typ A können beispielsweise nach Houben-Weyl, Methoden der Organischen Chemie, 4. Aufl., Bd. XIV/1, Seiten 761 bis 841, Georg Thieme Verlag, 1961 hergestellt werden. Sie sind auch in geeigneter Form im Handel erhältlich. Dabei kann vorzugsweise das radikalische, aber auch das ionische Polymerisationsverfahren zur Anwendung kommen. Die mittleren Molekulargewichte M_{W} (Gewichtsmittel) der erfindungsgemäß eingesetzten Polymerisate A liegen in der Regel oberhalb von 3 000, vorzugsweise ab oder oberhalb von 5 000, besonders bevorzugt im Bereich von 5 000 bis 10⁶, insbesondere zwischen 2 x 10⁴ und 5 x 10⁵ Dalton (Bestimmung durch Lichtstreuung). Dabei sei betont, daß die mittleren Molekulargewichte M_{W} die Eignung der Polymerisate A nicht kritisch zu beeinflussen scheinen. Dies gilt sowohl für die Homo- als auch für die Copolymerisate der Typen A und C.

Für eine Verträglichkeit von Polymerisat A und Polymerisat C ist die Taktizität der Polymeren von gewisser Bedeutung. In der Regel ist insbesondere ein Polymerisat C mit einem geringen Anteil an isotaktischen Triaden (wie es beispielsweise durch radikalische Polymerisation erhalten wird) gegenüber Polymerisaten mit hohem isotaktischen Anteil, wie es durch spezielle ionische Polymerisation erzeugt wird, bevorzugt.

Die Herstellung der Homo- bzw. Copolymerisate C erfolgt nach bekannten Verfahren (vgl. hierzu H. Rauch-Puntigam, Th. Völker, Acryl- und Methacrylverbindungen, Springer Verlag, 1967). Wenn auch prinzipiell eine Herstellung durch anionische oder Group-transfer-Polymerisation [siehe hierzu O.W. Webster et al., J. Am. Chem. Soc. 105, 5706 (1983)] möglich ist, so ist doch die radikalische Polymerisation die bevorzugte Herstellungsform. Die mittleren Molekulargewichte M_{W} der Polymerisate C liegen in der Regel oberhalb von 3 000, vorzugsweise oberhalb von 5 000, im allgemeinen vorzugsweise im Bereich von 10⁴ bis 10⁶, besonders vorzugsweise im Bereich von 2 x 10⁴ bis 5 x 10⁵, insbesondere im Bereich von 2 x 10⁴ bis 3 x 10⁵ Dalton (Lichtstreuung). Bei der Auswahl der Monomerkomponenten, die als Comonomere für das Polymerisat C eingesetzt werden sollen, ist darauf zu achten, daß die Glasübergangstemperatur des resultierenden Polymerisats C die technische Anwendbarkeit nicht einschränkend beeinflußt.

### Die Beschichtung der Mischung aus A und B mit Polymerisat C

Die erfindungsgemäßen als Beschichtungen für Substratmaterialien, bestehend aus Gemischen von Polymerisat A und Flammschutzmittel B, wegen ihrer guten Haftung ausgezeichneten Poly(meth)acrylate C bilden entsprechend der Kriterien der einheitlichen Glasübergangstemperatur oder der "optischen Methode" (Klarheit eines aus homogener Lösung des Polymergemischs gegossenen Films, vgl. Brandrup, Immergut, Polymer Handbook, 2nd Ed., III; Seite 211, J. Wiley, 1975) mit den Gemischen aus A und B verträgliche Polymermischungen. Als ein weiterer Test für die Mischbarkeit wird das Auftreten der unteren kritischen Lösungstemperatur (Lower Critical Solution Temperature = LCST) herangezogen (vgl. hierzu US 3 253 060, US 3 458 291). Das Auftreten der LCST beruht darauf, daß sich beim Erwärmen eine bis dahin klare, homogene Polymermischung in Phasen auftrennt und dabei optisch trübe bis opak wird. Nach der Literatur stellt dieses Verhalten einen Beweis dafür dar, daß die ursprüngliche Polymermischung aus einer einzigen, im thermodynamischen Gleichgewicht befindlichen homogenen Phase bestanden hatte.

Die Polymermischungen, bestehend aus A, B und C, sind überraschenderweise homogen und weisen Entmischungstemperaturen von ≥ 120 Grad C, bevorzugt ≥ 150 Grad C auf. Experimentell wird hierbei der Trübungspunkt (Trübungstemperatur = Phasenübergang homogen-heterogen) bestimmt, beispielsweise auf der Kofler-Heizbank (Chem. Ing. Technik, 1950, Seite 289).

Die Deckschicht, bestehend aus Poly(meth)acrylat C, weist aufgrund ihrer Verträglichkeit eine ausgezeichnete Haftung auf dem Substrat, bestehend aus Polymerisat A und Flammschutzmittel B, auf und wird durch Coextrusion oder Lackierung in Schichtdicken von 1 bis 500 µm, in der Regel von 1 bis 200 µm, vor allem in Schichtdicken bis etwa 100 µm nach ansonsten bekannten Techniken aufgebracht. Bei der Extrusionstechnik verwendet man beispielsweise bekannte Mehrstoff-Schlitzdüsen. Die Extrusion erfolgt beispielsweise bei Temperaturen zwischen 150 und 300 Grad C. Die Deckschicht kann auch durch Lackierung aufgetragen werden. Beispielsweise können hierzu halqgenierte Lösungsmittel, wie z.B. Chloroform, oder auch halogenfreie Lösungsmittel, wie z.B. 1-Methoxypropanol-2, verwendet werden.

### Vorteilhafte Wirkungen der Erfindung

Der Verbund aus Stubstrat, bestehend aus Polymerisat A und Flammschutzmittel B, und Deckschicht, bestehend aus Poly(meth)acrylat C weist überraschend gute Brandfestigkeiten trotz der nicht flammfest ausgerüsteten Poly(meth)acrylatschicht (C) auf. Die Brandfestigkeit des Verbundes entspricht in der Regel der Brandfestigkeit des Gemischs aus Polymerisat A und Flammschutzmittel B.

Da in der Deckschicht bestehend aus Polymerisat C UV-Absorber enthalten sind, die einpolymerisiert oder in niedermolekularer Form eingemischt sein können, so ist ein wirksamer Schutz von Substraten, die UV-labile Polymerisate A, wie beispielsweise Polystyrole oder Mischungen aus Polystyrolen und Polyphenylenethern, enthalten, gegen UV-induzierte Eigenschaftsbeeinträchtigungen wie beispielsweise Verfärbung, Eintrübung und/oder Verlust an mechanischen Eigenschaften, möglich. Wichtig ist dies insbesondere bei transparenten Substratmaterialien, wie z.B. transparentes, flammfestes Polystyrol.

Platten, bei denen das Substrat einen höheren Brechungsindex aufweist als die Deckschicht, wie beispielsweise Poly(meth)acrylat-Schichten auf flammfestem Polystyrol, weisen gegenüber dem unbeschichteten Substrat eine verbesserte Lichtdurchlässigkeit auf. Besonders interessant sind hierbei mehrfachbeschichtete Stegmehrfachplatten, wie sie beispielsweise zur Verglasung von Gewächshäusern eingesetzt werden. Bei einer Mehrfachbeschichtung kann die Lichtdurchlässigkeit deutlich verbessert werden (vgl. hierzug beispielsweise deutsches Gebrauchsmuster G 85 14 365.0).

In der Regel weisen Substratmaterialien mit geringer Kratzfestigkeit und/oder geringer Korrosionsbeständigkeit, wie beispielsweise Polystyrol, nach dem Beschichten mit Poly(meth)acrylat C bessere Kratzfestigkeit und veränderte Korrosionseigenschaften auf.

Das ansonsten gravierende Problem der Wiederverwendung heterogen beschichteter Kunststoffabfälle entfällt, da Abfälle aufgrund der guten Verträglichkeit wieder eingearbeitet werden können.

Die folgenden Beispiele dienen zur Erläuterung der Erfindung.

Die Bestimmung der Brandfestigkeit erfolgt nach DIN 4102. Die Witterungsbeständigkeit wird nach DIN 53 387 im Xenotest ermittelt. Die Lichttransmission T_{D65} wird nach DIN 5033/5036 bestimmt.

### BEISPIELE

### Allgemeine Vorschrift zur Synthese des Poly(meth)acrylats C

Die Monomeren werden beispielsweise unter Zusatz von 0,4 Gew.-Teilen (bezogen auf die Monomeren) tert.-Butylperpivalat, 0,1 Gew.-Teilen 2,2'-Azobisisobutyronitril und 0,4 Gew.-Teilen Dilauroylperoxid als Polymerisationsinitiatoren sowie 0,5 Gew.-Teilen Dodecylmercaptan als Molekulargewichtsregler im Folienschlauch 3 Stunden bei 55 Grad C und 16 Stunden bei 50 Grad C im Wasserbad polymerisiert. Zur Endpolymerisation wird 3 Stunden bei 110 Grad C im Trockenschrank getempert. Das Polymerisat ist farblos und transparent. Die mittleren Molekulargewichte M_{W} liegen etwa bei 8 x 10⁴ bis 1,2 x 10⁵ Dalton je nach Monomerzusammensetzung.

Anschließend werden die solchermaßen hergestellten Polymerisate gemahlen.

### Beispiel 1

### Beschichtung einer flammfesten Polystyrol-Stegdoppelplatte mit Poly(meth)acrylat C

Eine Monomerenmischung bestehend aus Methylmethacrylat, Cyclohexylmethacrylat, Methylacrylat und 2-(2'-Hydroxyphenyl)-5-methacrylamido-benzotriazol (HPMAB) wurde gemäß obiger Vorschrift polymerisiert und gemahlen.

Die Zusammensetzung des Poly(meth)acrylats C lautet:
58 Gew.-% Methylmethacrylat
35 Gew.-% Cyclohexylmethacrylat
5 Gew.-% HPMAB
2 Gew.-% Methylacrylat

Das Polymerisat C wird gemahlen und nach Extrusion nebst Monomerenentgasung granuliert.

Die solchermaßen erhaltene Formulierung wird in Coextrusion in einem Extrusionswerkzeug mittels einer Mehrkanal-Düse auf Stegdoppelplatten (SDP), bestehend aus einem brandgeschützten Polystyrol (Polystyrol ® 158 KWU, BASF, B1-Brandfestigkeit nach DIN 4102) aufgebracht.

Die Dicke der Coextrusionsschicht beträgt 20 bis 100 µm, wobei die Dicke über den Gurten im allgemeinen an der unteren Grenze liegt.

### Beispiel 2

### Bewitterung der nach Beispiel 1 beschichteten SDP

Nach Beispiel 1 beschichtete SDP zeigen nach 5 000 Stunden Xenotest keine signifikante Vergilbung oder Eintrübung. Unbeschichtetes Substratmaterial ist bereits nach 500 Stunden Xenotest merklich gelbstichig und matt.

### Beispiel 3

### Brandfestigkeitstest an der nach Beispiel 1 beschichteten SDP

Nach Beispiel 1 beschichtete SDP zeigen nach DIN 4102 ebenso wie die unbeschichteten Substrat-SDP B1-Brandfestigkeit.

### Beispiel 4

### Transparenz der nach Beispiel 1 beschichteten SDP

Der Transmissionsgrad T_{D65/10} am Obergurt der beschichteten SDP beträgt nach DIN 5033/5036 90,6 % bei einer Obergurtdicke von 1,8 mm.

Vergleichsweise beträgt T_{D65/10} am Obergurt einer unbeschichteten SDP 90,5 %, allerdings bei einer geringeren Obergurtdicke von 1,5 mm.

### Beispiel 5

### Wiedereinarbeitbarkeit von Abfällen der nach Beispiel 1 beschichteten SDP

Polystyrol wird zu 20 Gew.-% mit gemahlenen Plattenabfällen der beschichteten SDP-Abschnitte in der Schmelze gemischt und granuliert. Diese Mischung wird wiederum zu einer SDP extrudiert und gemäß Beispiel 1 beschichtet. Die Eigenschaften der so erhaltenen SDP entsprechen denen der gemäß Beispiel 1 erhaltenen beschichteten SDP.

## Patentansprüche

1. Flammfeste und witterungsbeständige Gegenstände, die B1-Brandfestigkeit nach DIN 4102 besitzen, gebildet aus einem Gemisch von 70 bis 99,9 Gew.-Teilen eines Polymerisats A, enthaltend 20 bis 100 Gew.-% Styrol-Einheiten mit 0,1 bis 30 Gew.-Teilen eines mit A verträglichen Flammschutzmittels B als Kernmaterial, welches mit einem Überzug mit einer Dicke von 1 - 200 µm eines, mit dem Gemisch aus A und B verträglichen Poly(meth)acrylats C, enthaltend 10 bis 100 Gew.-% von Monomeren der Formel I 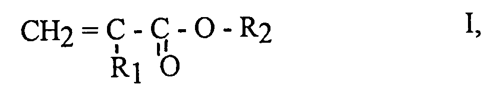 worin:
R₁ für Wasserstoff, Methyl und
R₂ für einen gegebenenfalls substituierten Cycloalkylrest mit 5 bis 8 Kohlenstoffatomen oder einen nichtaromatischen, ringkohlenstoffhaltigen Heteroyclus mit 4 bis 12 Ringatomen und wenigstens 2 Heteroatomen X = 0, S, NH, wobei die Heteroatome nicht nebeneinander stehen dürfen,
steht,
versehen ist, wobei das Poly(meth)acrylat C kein Flammschutzmittel, aber einen gegebenenfalls einpolymerisierten UV-Absorber in Anteilen von 0,1 bis 20 Gew.-% bezogen auf C enthält, und wobei das Polymerisat A einen Anteil von Monomeren aus der Gruppe (Meth)acrylnitril, Maleinsäureanhydrid und Maleinsäureimiden unter 10 Gew.-% aufweist.

2. Spritzgegossene Formkörper gemäß Anspruch 1.

3. Extrudierte Formkörper gemäß Anspruch 1.

4. Stegmehrfachplatten gemäß Anspruch 1.

## Claims

1. Flameproof and weather resistant articles with a B1 fire resistance according to DIN 4102, produced from a mixture of 70 to 99.9 parts by weight of a polymer A, comprising 20 to 100 wt.% of styrene units, with 0.1 to 30 parts by weight of a fire-proofing agent B which is compatible with A as core material, and provided with a 1 - 200 µm thick coating of a poly(meth)acrylate C compatible with the mixture of A and B, comprising 10 to 100 wt.% of monomers of formula I 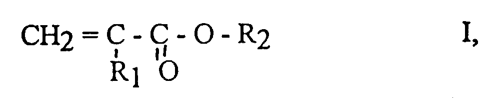 wherein
R₁ is hydrogen, methyl and
R₂ is an optionally substituted cycloalkyl group having 5 to 8 carbon atoms or a non-aromatic, ring carbon containing heterocycle having 4 to 12 ring atoms and at least 2 heteroatoms X = O, S, NH, wherein the hetero atoms must not be adjacent to one another,
the poly(meth)acrylate C comprising no fire-proofing agent but comprising an optionally homopolymerised ultraviolet absorber, in amounts of 0.1 to 20 wt.% based on C, and wherein the polymer A comprises an amount below 10 wt.% of monomers from the group of (meth)acrylonitrile, maleic acid anhydride and maleic acid imides.

2. Injection-moulded articles according to claim 1.

3. Extrusion-moulded articles according to claim 1.

4. Multi-ribbed plates according to claim 1.

## Revendications

1. Articles résistants aux flammes et aux intempéries, possédant une résistance au feu B1 selon DIN 4102, construits à partir d'un mélange de 70 à 99,9 parties en poids d'un polymère A, contenant 20 à 100 % en poids de motifs styrol avec 0,1 à 30 parties en poids d'un agent retardant les flammes B compatible avec A en tant que matériau de coeur, lequel est muni d'un revêtement, d'une épaisseur de 1-200 µm, en un poly(méth)acrylate C compatible avec le mélange de A et B, contenant 10 à 100 % en poids de monomères de formule I 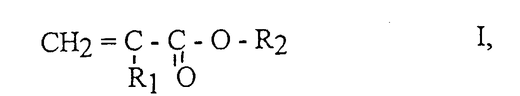 où :
R₁ est mis pour un atome d'hydrogène, un groupement méthyle et
R₂ est mis pour un reste cycloalkyle à 5-8 atomes de carbone éventuellement substitué ou pour un hétérocycle non aromatique contenant un cycle carboné avec 4-12 atomes de carbone dans le cycle et au moins 2 hétéroatomes X = O, S, NH, les hétéroatomes ne devant pas être voisins,
dans lesquels le poly(méth)acrylate C ne contient pas d'agent retardant les flammes mais un agent absorbant les UV, éventuellement en liaison polymère, dans une proportion de 0,1 à 20 % en poids par rapport à C₁ et dans lesquels le polymère A présente une proportion de monomères provenant du groupe formé par le (méth)acrylonitrile, l'anhydride maléique et l'imide maléique inférieure à 10 % en poids.

2. Corps moulés produits par moulage par injection selon la revendication 1.

3. Corps moulés produits par extrusion selon la revendication 1.

4. Panneaux à entretoises multiples selon la revendication 1.
